# EUROPÄISCHE PATENTSCHRIFT

(11) **EP 3 673 531 B1**
(45) Veröffentlichungstag und Bekanntmachung des Hinweises auf die Patenterteilung: **05.05.2021**
(21) Anmeldenummer: 18769043.3
(22) Anmeldetag: 23.08.2018
(51) Int. Cl.: H01M 10/0525, H01M 10/056

(54) **FESTKÖRPERBATTERIE AUF BASIS EINER IONENLEITFÄHIGEN MATRIX AUS CAMPHER ODER 2-ADAMANTANON**
SOLID STATE BATTERY BASED ON AN ION-CONDUCTING MATRIX MADE OF CAMPHOR OR 2-ADAMANTANONE
BATTERIE D'ÉTAT SOLIDE BASÉE SUR UNE MATRICE CONDUISANT L'ION FAITE DU CAMPHRE OU 2-ADAMANTANONE

(30) Priorität: 24.08.2017 DE 102017214817; 08.02.2018 DE 102018201984
(43) Veröffentlichungstag der Anmeldung: 01.07.2020
(73) Patentinhaber: Fraunhofer-Gesellschaft zur Förderung der angewandten Forschung e.V., 80686 Munchen (DE)
(72) Erfinder: BARDENHAGEN, Ingo, 27777 Ganderkesee (DE); SOTO, Marc, 28359 Bremen (DE); SCHWENZEL, Julian, 27777 Ganderkesee (DE); KOSCHEK, Katharina, 28359 Bremen (DE); BUSSE, Matthias, 28757 Bremen (DE)
(74) Vertreter: Gagel, Roland
(86) Internationale Anmeldenummer: PCT/EP2018/072703
(87) Internationale Veröffentlichungsnummer: WO 2019/038348

(56) Entgegenhaltungen:
- WO-A1-2015/043564
- DE-A1-102015 224 569

## Beschreibung

### Technisches Anwendungsgebiet

Die vorliegende Erfindung betrifft eine Festkörperbatterie, insbesondere eine Lithium-Ionen-Festkörperbatterie, aus einer oder mehreren Batteriezellen, die eine ionenleitfähige Festkörpermatrix zur Bildung eines Festelektrolyten aufweisen, die zwischen zwei Elektroden angeordnet ist.

Wiederaufladbare Festkörper-Lithium-Ionen-Batterien werden als Energiespeicher der nächsten Generation angesehen. Sie zeigen gegenüber kommerziellen Lithium-Ionen-Batterien mit flüssigen oder gelförmigen Elektrolyten Vorteile im Hinblick auf ihre Sicherheit, Energiedichte und Langzeitstabilität. Entscheidend für die Entwicklung von Festkörper-Lithium-Ionen-Batterien ist neben der Entwicklung geeigneter Prozesstechnologien zur Fertigung der Batterien auch die Bereitstellung geeigneter Festelektrolyte mit hohen Lithiumionen-Leitfähigkeiten und möglichst großen nutzbaren Spannungsfenstern. Festelektrolyte sind feste Ionenleiter und treten strukturell in sehr unterschiedlichen Formen auf. Als Werkstoffe liegen sie im Allgemeinen als Polymere oder Keramiken mit kristalliner oder amorpher Struktur vor und dienen gleichzeitig als feste Separatoren zwischen den Elektroden. Da Festelektrolyte nicht entflammbar sind, zeichnen sich Festkörperbatterien durch eine erhöhte intrinsische Betriebssicherheit aus. Nachteilig ist die geringe Ionenbeweglichkeit in Festelektrolyten, die eine wesentliche Herausforderung für die Entwicklung von Festkörperbatterien darstellt. Die für den Festelektrolyten eingesetzte Festkörpermatrix sollte über einen breiten Temperaturbereich akzeptable ionische Leitfähigkeiten aufweisen und eine ausreichende mechanische Stabilität beibehalten.

### Stand der Technik

Als polymerbasierte Festelektrolyte wurden bisher unterschiedliche Systeme betrachtet. Polyethylenoxid (PEO) stellt das am besten untersuchte Polymer für den Einsatz als Polymerelektrolyt in Lithium-Ionen-Batterien dar. Es verfügt über einige Eigenschaften, die es für den Einsatz als Lithiumionen-leitender Polymerelektrolyt interessant machen, insbesondere die Fähigkeit, Lithium-Salze zu komplexieren, eine relativ hohe Lithiumionenleitfähigkeit insbesondere im amorphen Zustand und eine gute Formstabilität unterhalb des Schmelzbereichs. Nachteilig sind allerdings der Verlust der Formstabilität oberhalb des Schmelzbereichs und die geringe Ionenleitfähigkeit bei Raumtemperatur aufgrund der Kristallisationsneigung. Zur Vermeidung dieser Nachteile wurden unterschiedliche Ansätze verfolgt. So wurde bspw. durch Mischen mit anderen Polymeren (Blending), durch Copolymerisation, durch Quervernetzung oder durch Nutzung von Feststoffadditiven (z. B. Nanopartikel) die Formstabilität bei erhöhten Temperaturen gesteigert. Zudem wurde versucht, die Leitfähigkeit bei niedrigen Temperaturen durch Herabsetzung der Glasübergangstemperatur zu steigern, bspw. durch Plastifizierungsmittel, Copolymerisation oder durch das Einbringen von Füllstoffen.

Auch plastische Kristalle wurden für den Einsatz als Festelektrolyte in Festkörperbatterien untersucht. Plastische Kristalle sind kristalline Verbindungen, die aus Molekülen bestehen. Der Begriff "plastisch" bezieht sich auf die mechanische Verformbarkeit im Gegensatz zu typischen kristallinen Festkörpern, da sie einen oftmals wachsartigen Eindruck vermittelt. Elektrolyte auf Basis plastischer Kristalle zeichnen sich durch eine hohe thermische Stabilität und gute Ionenleitfähigkeiten aus. Insbesondere die Klasse der Dinitrile wurde dabei in der wissenschaftlichen Literatur beschrieben. Durch die polare Stickstoff-Kohlenstoff-Bindung können Lithiumionen gut stabilisiert werden, wodurch hohe Leitsalzkonzentrationen ermöglicht werden. Die Wechselwirkungen sind aber nicht so stark, dass die Lithiumionen in ihrer Mobilität zu stark eingeschränkt werden. Es wurden daher zahlreiche Kombinationen aus Polymeren und Succinonitril (SN) betrachtet. Das Material besitzt einen zusätzlichen fest-fest Phasenübergang, wobei ein Rotationsfreiheitsgrad im Molekülkristallgitter erhalten wird. Diese Eigenschaft ermöglicht es dem Feststoff, Salze zu lösen und im Fall der Leitsalze diese auch zu dissoziieren. Besonders der letzte Punkt ist für den Erhalt einer hohen ionischen Leitfähigkeit entscheidend und gelingt nur aufgrund der hohen Dielektrizitätskonstante des SN. Diese beruht auf dem hohen Dipolmoment der terminalen Nitrilgruppen. Aufgrund der geringen mechanischen Festigkeit und der relativ niedrigen Schmelztemperaturen von SN eignet sich dieses trotz hoher Ionenleitfähigkeiten aber nicht in reiner Form als Elektrolyt für eine Festkörperbatterie.

Die Aufgabe der vorliegenden Erfindung besteht darin, eine Festkörperbatterie, insbesondere eine Lithium-Ionen-Festkörperbatterie, mit einer Festkörpermatrix als Festelektrolyt bereitzustellen, bei der die Festkörpermatrix über einen großen Temperaturbereich mechanisch stabil ist und gleichzeitig eine für den Betrieb der Festkörperbatterie ausreichende ionische Leitfähigkeit ermöglicht.

### Darstellung der Erfindung

Die Aufgabe wird mit der Festkörperbatterie gemäß Patentanspruch 1 gelöst. Vorteilhafte Ausgestaltungen der Festkörperbatterie sind Gegenstand der abhängigen Patentansprüche oder lassen sich der nachfolgenden Beschreibung sowie dem Ausführungsbeispiel entnehmen.

Die vorgeschlagene Festkörperbatterie besteht in bekannter Weise aus einer oder mehreren Batteriezellen, die eine ionenleitfähige Festkörpermatrix zur Bildung des Festelektrolyten aufweisen, die zwischen zwei Elektroden eingebettet bzw. angeordnet ist, die entsprechendes Aktivmaterial aufweisen. Die vorgeschlagene Festkörperbatterie zeichnet sich dadurch aus, dass die Festkörpermatrix entweder aus Campher (C₁₀H₁₆O) oder aus 2-Adamantanon (C₁₀H₁₄O) oder einer Mischung von Campher oder 2-Adamantanon mit einem oder mehreren weiteren Stoffen gebildet ist, mit denen keine Legierung gebildet wird. Bei diesen weiteren Stoffen kann es sich bspw. um Leitsalze, Füllstoffe oder andere Additive handeln, nicht jedoch um weitere plastische Kristalle, wie beispielsweise SN.

Die für die Festkörpermatrix gewählten Campher und 2-Adamantanon sind plastische Kristalle, die bessere thermomechanische Eigenschaften als das oben beschriebene SN aufweisen. Campher kommt natürlich vor und kann großtechnisch hergestellt werden. 2-Adamantanon kann aus Adamantan gewonnen werden, welches in Petroleum enthalten ist. Mit Schmelzpunkten von 179°C (Campher) und 270°C (2-Adamantanon) bieten beide Verbindungen im Vergleich zu SN ein thermisch deutlich stabileres System. Das Dipolmoment wird in beiden Verbindungen von der Keto-Gruppe erzeugt und ist mit ungefähr 3,1 für das Campher und 3,4 für das 2-Adamantanon ähnlich groß wie bei SN. Entsprechend sind die Leitsalzdissoziationen in beiden Verbindungen und damit die Bildung einer ionisch leitfähigen Mischung ebenso möglich. Das wachsartige (plastische) Verhalten ermöglicht zusätzlich diverse Formgebungsverfahren, bspw. Pressen, Walzen usw., die eine Herstellung von dichten freistehenden Elektrolyten oder auch von Elektroden (Kathoden, Anoden) ermöglichen.

In einer bevorzugten Ausgestaltung ist daher auch wenigstens eine der Elektroden der Festkörperbatterie, vorzugsweise beide Elektroden, als Kompositelektrode aus dem Aktivmaterial, Campher oder 2-Adamantanon und einem Stromsammler oder Stromableiter sowie ggf. weiteren Bestandteilen gebildet. Bei diesen Bestandteilen kann es sich um Zusätze zum Verbessern der elektrischen Leitfähigkeit, wie bspw. Leitruß, oder auch um einen Binder handeln. Die Kompositelektroden können dabei aus den gleichen Bestandteilen bestehen wie entsprechende Batterien des Standes der Technik, wobei lediglich noch Campher und Leitsalz oder 2-Adamantanon und Leitsalz zugemischt wurde, so dass dieses (Campher oder 2-Adamantanon) in der fertigen Elektrode mit einem Volumenanteil vorliegt, der vorzugsweise im Bereich zwischen 5% und 25%, besonders bevorzugt zwischen 10% und 20% liegt. Die Elektroden werden durch mechanische Bearbeitung, bspw. durch Walzen oder Pressen, noch kompaktiert, um eine unerwünschte Porosität der Elektroden zu entfernen. Durch den Anteil an Campher oder 2-Adamantanon und deren plastische Eigenschaften wird eine vollständige Kompaktierung ermöglicht, so dass die fertigen Elektroden keine Porosität mehr aufweisen.

Die Festkörperbatterie kann im einfachsten Fall aus lediglich einer Batteriezelle gebildet sein. In der Regel weist die Festkörperbatterie jedoch in bekannter Weise mehrere Batteriezellen auf, die übereinander gestapelt und parallel oder in Serie elektrisch miteinander verschaltet sind. Hier unterscheidet sich die vorgeschlagene Festkörperbatterie nicht von den bekannten Festkörperbatterien des Standes der Technik.

Durch die Verwendung eines plastischen Kristalls mit besseren thermomechanischen Eigenschaften als die bisher für den Einsatz als Festelektrolyt bekannten Materialien können Festkörperbatterien, insbesondere Festkörper-Lithium-Ionen-Batterien, hergestellt werden, die in dem für die Batterieanwendung relevanten Temperaturbereich von -20°C bis 60°C stabil (fest) sind. Zusätzlich sind sie in diesem Temperaturbereich gut ionisch leitfähig. Während bspw. PEO-basierte Festkörperbatterien in diesem Temperaturbereich deutlich schlechtere ionische Leitfähigkeiten aufweisen und daher bei hohen Temperaturen betrieben werden müssen, was den Wirkungsgrad der Batterie und die inhärente Sicherheit der Batterie senkt, tritt dieses Problem bei der Nutzung von Campher oder 2-Adamantanon als Festkörpermatrix nicht auf. Ein weiterer wichtiger Vorteil sind die Herstellungsmöglichkeiten für die vorgeschlagene Festkörperbatterie mit Campher oder 2-Adamantanon als Festkörpermatrixmaterial anstelle von Keramiken und Polymeren. Besonders die Herstellung dichter Elektroden mit hohem Aktivmaterialanteil, die für den Erhalt hoher Energiedichten essentiell ist, stellt eine große Herausforderung dar. Die plastische Verformbarkeit von Campher und 2-Adamantanon ermöglicht es, direkt bei der Herstellung oder durch Nachbehandlung dieser Elektroden, bspw. durch Walzen, Porositäten in den Elektroden zu vermeiden.

Aus der Mischung von Campher oder 2-Adamantanon mit Metallsalzen, insbesondere Lithiumsalzen, können unterschiedliche Komponenten für eine Festkörper- bzw. Festkörper-Lithium-Ionenbatterie hergestellt werden. Kompositelektroden aus Aktivmaterial, Leitruß, Binder und leitfähigem Campher oder 2-Adamantanon können im klassischen Slurry-Verfahren hergestellt werden. Aufgrund des plastischen Kristalls können diese Kompositelektroden durch nachträgliches Kalandrieren ohne Porositäten dargestellt werden. Insgesamt ermöglichen der Campher und das 2-Adamantanon die Herstellung einer bei Raumtemperatur funktionsfähigen Festkörperbatterie, die sich mit klassischen Produktionslinien darstellen lässt.

### Kurze Beschreibung der Zeichnungen

Die vorgeschlagene Festkörperbatterie wird nachfolgend anhand eines Ausführungsbeispiels in Verbindung mit den Zeichnungen nochmals näher erläutert. Hierbei zeigen:
- Fig. 1: eine schematische Darstellung des Aufbaus einer Batteriezelle der vorgeschlagenen Festkörperbatterie;
- Fig. 2: eine Messung der dynamischen Differenzkalorimetrie der Mischungen aus Campher und 2-Adamantanon mit einem Lithiumsalz (LiTFSI, Lithium bis(trifluoromethylsulfonyl)imide); und
- Fig. 3: eine Messung der ionischen Leitfähigkeiten der Mischungen aus Campher und 2-Adamantanon mit einem Lithiumsalz (LiTFSI, Lithium bis(trifluoromethylsulfonyl)imide) in Abhängigkeit von der Temperatur.

### Wege zur Ausführung der Erfindung

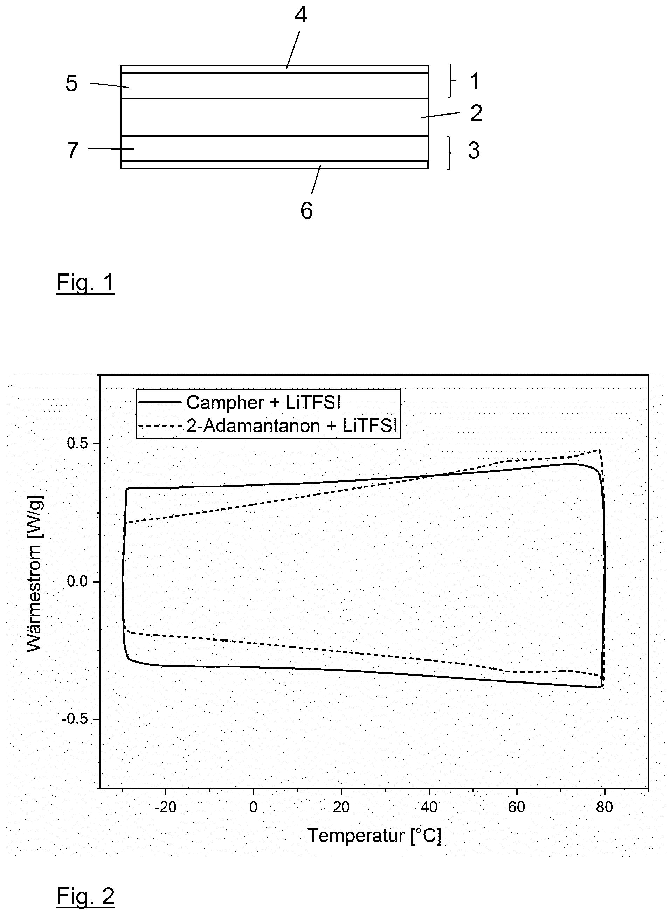

Figur 1 zeigt hierbei stark schematisiert den beispielhaften Aufbau einer Batteriezelle der vorgeschlagenen Festkörperbatterie. Die Batteriezelle besteht hierbei in bekannter Weise aus der Kathode 1 und der Anode 3, zwischen denen der Festelektrolyt 2 eingebettet ist. Bei der vorliegenden Festkörperbatterie besteht der Festelektrolyt 2 aus einer Festkörpermatrix aus Campher oder 2-Adamantanon, in die Lithiumsalze (bspw. LiTFSI, LiBETI, LiAsF₆, LiBF₄, LiFSI, LiTfO, LiClO₄, LiPF₆ oder LiBOB) eingelagert sind. Zur Herstellung werden Campher oder 2-Adamantanon mit Lithiumsalzen in einem Lösungsmittel (bspw. Aceton oder Tetrahydrofuran (THF)) suspendiert und vermischt, wobei Letzteres anschließend wieder entfernt wird.

Die Anode 3 kann bspw. als Kompositelektrode aus einer Schicht 7 bestehend aus Anodenaktivmaterialien wie bspw. Graphit oder LTO, Kohlenstoff und einem polymeren Binder, denen vorzugsweise Campher oder 2-Adamantanon und Leitsalz beigemischt ist, und einem Stromsammler 6 aus Kupfer gebildet sein. Die Kathode 1 kann bspw. aus einer Schicht aus Aktivmaterial (bspw. LFP, LCO, LMO, NMC oder NCA) und Kohlenstoff, denen vorzugsweise ebenfalls Campher oder 2-Adamantanon mit Leitsalz beigemischt ist, und einem Stromsammler aus Aluminium 4 bestehen.

Im Folgenden werden zwei beispielhafte Zusammensetzungen der vorgeschlagenen Festkörperbatterie beschrieben.

### Beispiel 1:

Für die Herstellung einer Kompositkathode wird eine Paste aus 83,0 gew% LiFePO₄, 6,0 gew% Kohlenstoff (Super C65), 6,0 gew% Binder (PVDF), 4,5 gew% Campher und 1,5 gew% LiTFSI in Aceton hergestellt, auf eine Aluminiumfolie beschichtet, getrocknet und kalandriert. Die Paste für die Kompositanode besteht aus 82,0 gew% Graphit, 6,0 gew% Kohlenstoff (Super C65), 6,0 gew% Binder (PVDF), 4,5 gew% Campher und 1,5 gew% LiTFSI in Aceton. Diese Paste wird auf eine Kupferfolie beschichtet und ebenfalls getrocknet und kalandriert. Der Elektrolyt wird durch uniaxiales Pressen hergestellt. Hierfür wird 75 gew% Campher mit 25 gew% LiTFSI in Aceton gemischt, getrocknet und auf eine Dicke von 100 µm gepresst.

### Beispiel 2:

Für die Herstellung einer Kompositkathode wird eine Paste aus 83,0 gew% LiFePO4, 6,0 gew% Kohlenstoff (Super C65), 6,0 gew% Binder (PTFE), 4,5 gew% 2-Adamantanon und 1,5 gew% LiTFSI in THF hergestellt, auf eine Aluminiumfolie beschichtet, getrocknet und kalandriert. Die Paste für die Kompositanode besteht aus 82,0 gew% Graphit, 6,0 gew% Kohlenstoff (Super C65), 6,0 gew% Binder (PTFE), 4,5 gew% 2-Adamantanon und 1,5 gew% LiTFSI in THF. Diese Paste wird auf eine Kupferfolie beschichtet und ebenfalls getrocknet und kalandriert. Der Elektrolyt wird durch uniaxiales Pressen hergestellt. Hierfür wird 75 gew% 2-Adamantanon mit 25 gew% LiTFSI in THF gemischt, getrocknet und auf eine Dicke von 100 µm gepresst.

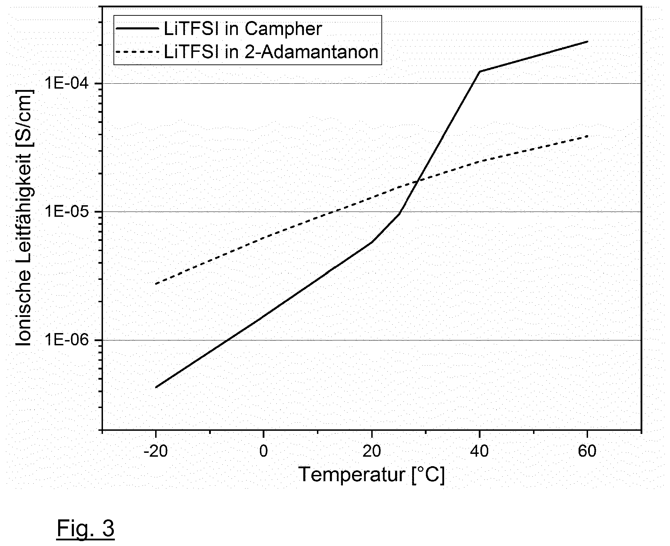

Die Figuren 2 und 3 zeigen für Mischungen aus Campher und 2-Adamantanon mit LiTFSI jeweils Messungen der dynamischen Differenzkalorimetrie (Fig. 2) und der ionischen Leitfähigkeiten in Abhängigkeit von der Temperatur (Fig. 3). Aus diesen Messungen ist ersichtlich, dass beide Mischungen in dem für die Batterieanwendung relevanten Temperaturbereich von -20°C bis 60°C thermisch stabil und gut ionisch leitfähig sind.

### Bezugszeichenliste

- 1: Kathode
- 2: Festelektrolyt
- 3: Anode
- 4: Stromsammler der Kathode
- 5: Kompositschicht der Kathode
- 6: Stromsammler der Anode
- 7: Kompositschicht der Anode

## Patentansprüche

1. Festkörperbatterie, insbesondere Lithium-Ionen-Festkörperbatterie, aus einer oder mehreren Batteriezellen, die eine ionenleitfähige Festkörpermatrix (2) zur Bildung eines Festelektrolyten aufweisen, die zwischen zwei Elektroden (1, 3) angeordnet ist,
**dadurch gekennzeichnet,**
**dass** die Festkörpermatrix (2) aus Campher oder aus 2-Adamantanon oder aus einer Mischung von Campher oder 2-Adamantanon mit einem oder mehreren weiteren Stoffen gebildet ist.

2. Festkörperbatterie nach Anspruch 1,
**dadurch gekennzeichnet,**
**dass** wenigstens eine der Elektroden (1, 3) eine Kompositelektrode aus einem Aktivmaterial, Campher und einem Stromsammler (4, 6) sowie gegebenenfalls weiteren Bestandteilen ist.

3. Festkörperbatterie nach Anspruch 1 oder 2,
**dadurch gekennzeichnet,**
**dass** beide Elektroden (1, 3) Kompositelektroden sind, die Campher enthalten.

4. Festkörperbatterie nach einem der Ansprüche 2 oder 3, **dadurch gekennzeichnet,**
**dass** Campher zu einem Anteil zwischen 10 und 20 Vol.% in der oder den Kompositelektroden enthalten ist.

5. Festkörperbatterie nach Anspruch 1,
**dadurch gekennzeichnet,**
**dass** wenigstens eine der Elektroden (1, 3) eine Kompositelektrode aus einem Aktivmaterial, 2-Adamantanon und einem Stromsammler (4, 6) sowie gegebenenfalls weiteren Bestandteilen ist.

6. Festkörperbatterie nach einem der Ansprüche 1 oder 5, **dadurch gekennzeichnet,**
**dass** beide Elektroden (1, 3) Kompositelektroden sind, die 2-Adamantanon enthalten.

7. Festkörperbatterie nach einem der Ansprüche 5 oder 6, **dadurch gekennzeichnet,**
**dass** 2-Adamantanon zu einem Anteil zwischen 10 und 20 Vol.% in der oder den Kompositelektroden enthalten ist.

8. Festkörperbatterie nach einem der Ansprüche 2 bis 7, **dadurch gekennzeichnet,**
**dass** der oder die Kompositelektroden Zusätze zum Verbessern der elektrischen Leitfähigkeit aufweisen.

9. Verwendung von Campher oder von 2-Adamantanon als Festkörpermatrix zur Bildung eines Festelektrolyten einer Festkörperbatterie.

10. Verwendung von Campher oder von 2-Adamantanon als Bestandteil einer Kompositelektrode, insbesondere für den Einsatz in einer Festkörperbatterie.

## Claims

1. A solid-state battery, particularly lithium-ion solid-state battery, composed of one or more battery cells, which comprise an ion-conducting solid matrix (2) for forming a solid electrolyte, which matrix is arranged between two electrodes (1, 3),
**characterized in that**
the solid matrix (2) is formed from camphor or 2-adamantanone or from a mixture of camphor or 2-adamantanone with one or more other substances.

2. The solid-state battery according to Claim 1,
**characterized in that**
at least one of the electrodes (1, 3) is a composite electrode made from an active material, camphor and a current collector (4, 6) as well as other optional constituents.

3. The solid-state battery according to Claim 1 or 2,
**characterized in that**
both electrodes (1, 3) are composite electrodes that contain camphor.

4. The solid-state battery according to either of Claims 2 or 3, **characterized in that**
camphor is contained in the composite electrode or composite electrodes in a proportion between 10 and 20 % by volume.

5. The solid-state battery according to Claim 1,
**characterized in that**
at least one of the electrodes (1, 3) is a composite electrode made from an active material, 2-adamantanone and a current collector (4, 6) as well as other optional constituents.

6. The solid-state battery according to either of Claims 1 or 5, **characterized in that**
both electrodes (1, 3) are composite electrodes which contain 2-adamantanone.

7. The solid-state battery according to either of Claims 5 or 6, **characterized in that**
2-adamantanone is contained in the composite electrode or composite electrodes in a proportion between 10 % and 20 % by volume.

8. The solid-state battery according to any one of Claims 2 to 7, **characterized in that**
the composite electrode or composite electrodes include(s) additives for improving electrical conductivity.

9. Use of camphor or of 2-adamantanone as solid matrix for forming a solid electrolyte of a solid-state battery.

10. Use of camphor or of 2-adamantanone as a constituent of a composite electrode, particularly for use in a solid-state battery.

## Revendications

1. Batterie à semi-conducteurs, en particulier batterie à semi-conducteurs lithium-ion, composée d'une ou plusieurs cellules de batterie, qui présentent une matrice solide (2) pour former un électrolyte solide, qui est disposée entre deux électrodes (1, 3), **caractérisé en ce que** la matrice solide (2) est formée de camphre ou de 2-adamantanone ou d'un mélange de camphre ou de 2-adamantanone avec une ou plusieurs autres substances.

2. Batterie à semi-conducteurs selon la revendication 1, **caractérisée en ce qu'**au moins une des électrodes (1, 3) est une électrode composite constituée d'un matériau actif, de camphre et d'un collecteur de courant (4, 6) ainsi que éventuellement d'autres composants.

3. Batterie à semi-conducteurs selon la revendication 1 ou 2, **caractérisée en ce que** les deux électrodes (1, 3) sont des électrodes composites contenant du camphre.

4. Batterie à semi-conducteurs selon une des revendications 2 ou 3, **caractérisé en ce que** du camphre est contenu entre 10 et 20% en volume dans l'électrode ou les électrodes composites.

5. Batterie à semi-conducteurs selon la revendication 1, **caractérisée en ce que** au moins une des électrodes (1, 3) est une électrode composite constituée d'un matériau actif, de 2-adamantanone et d'un collecteur de courant (4, 6) ainsi que éventuellement d'autres composants.

6. Batterie à semi-conducteurs selon la revendication 1 ou 5, **caractérisée en ce que** les deux électrodes (1, 3) sont des électrodes composites qui contiennent de la 2-adamantanone.

7. Batterie à semi-conducteurs selon une des revendications 5 ou 6, **caractérisée en ce que** du 2-adamantanone est contenu entre 10 et 20% en volume dans l'électrode ou les électrodes composites.

8. Batterie à semi-conducteurs selon une des revendications 2 à 7, **caractérisé en ce que** la ou les électrodes composites comportent des additifs pour améliorer la conductivité électrique.

9. Utilisation de camphre ou de 2-adamantanone comme matrice solide pour former un électrolyte solide d'une batterie à semi-conducteurs.

10. Utilisation de camphre ou de 2-adamantanone comme composant d'une électrode composite, en particulier pour une utilisation dans une batterie à semi-conducteurs.
